# FASCICULE DE BREVET EUROPEEN

(11) **EP 1 357 650 B1**
(45) Date de publication et mention de la délivrance du brevet: **11.07.2018**
(21) Numéro de dépôt: 03356058.2
(22) Date de dépôt: 07.04.2003
(51) Int. Cl.: H02B 1/26

(54) **Dispositif de connexion d'un boîtier électronique**
Verbindungsvorrichtung für elektronisches Gehäuse
Connecting device for a electronic casing

(30) Priorité: 23.04.2002 FR 0205075
(43) Date de publication de la demande: 29.10.2003
(73) Titulaire: Siemens Aktiengesellschaft, 80333 München (DE)
(72) Inventeur: Lafragette, Pascal, 71000 Macon (FR); Cisey, Johann, 71570 Saint Symphorien d'Ancelles (FR); Doutaz, Luc, 69500 Bron (FR)

(56) Documents cités:
- EP-A- 1 124 286
- US-B1- 6 196 882

## Description

La présente invention a pour objet un dispositif de connexion d'un boîtier électronique.

Les boîtiers électroniques utilisés dans le domaine de l'industrie sont généralement montés dans des armoires et sont juxtaposés les uns aux autres sur une même rangée, plusieurs rangées pouvant être superposées. Ces boîtiers possèdent une forme générale parallélépipédique, et possèdent chacun une ou plusieurs broches de connexion en vue de réaliser leur connexion avec des câbles conducteurs reliés à différents types d'appareils tels que des systèmes d'horlogerie, des relais, ou des systèmes de traitement du signal.

Du fait que l'accessibilité à un boîtier ne peut généralement se faire que par une face longitudinale, la connexion aux câbles conducteurs est réalisée par l'intermédiaire de modules de raccordement fixés chacun sur la face longitudinale d'assemblage d'un boîtier. Un module de raccordement contient des pièces de connexions à des broches plates dépassant du boîtier, ainsi qu'un dispositif de fixation de câbles conducteurs destiné à être mis en liaison avec ces broches. Il est connu de fixer un module de raccordement sur la face longitudinale d'un boîtier par un système de glissière permettant un coulissement longitudinal, avec verrouillage par une languette élastique.

Généralement, la languette élastique est ménagée dans le module de raccordement, par découpage de la paroi de ce module, et vient s'engager dans un évidement ménagé dans la face d'assemblage du boîtier.

Pour réaliser la désolidarisation d'un module et du boîtier correspondant, il convient d'actionner la languette de verrouillage à l'aide d'un outil tel qu'un tournevis, pour la dégager de l'évidement dans lequel elle est engagée. En pratique, il existe plusieurs difficultés. Tout d'abord, l'opérateur ne sait pas exactement où engager l'outil car la configuration de la languette de verrouillage ménage plusieurs fentes dans la face supérieure de l'ensemble constitué par un boîtier et un module. Si le tournevis est engagé du mauvais côté, il y a risque de destruction de la languette de verrouillage. En outre, il convient, après introduction de l'outil tel qu'un tournevis, d'actionner celui-ci latéralement pour faire pivoter la languette. Cette opération n'est pas simple à réaliser et est accompagnée d'une pression axiale sur le module dans un sens opposé au sens de coulissement de celui-ci vers sa désolidarisation du boîtier.

Il est connu de EP1124286 et US6196882 un dispositif suivant le préambule de la revendication 1.

Le but de l'invention est de fournir un dispositif de connexion d'un boîtier électronique qui permette la désolidarisation facile et sans risque de destruction d'un module de raccordement associé à ce boîtier.

A cet effet, le dispositif est tel que revendiqué à la revendication 1.

La languette élastique de verrouillage étant associée au boîtier, lorsque l'on exerce une action dans un sens du déverrouillage, cette action est exercée sur le boîtier et non pas sur le module de raccordement, permettant un retrait facile de celui-ci.

Suivant une première forme d'exécution de ce dispositif, la languette élastique de verrouillage est en forme de crochet déformable élastiquement muni d'une nervure d'accrochage, tandis que l'organe de verrouillage associé au module de raccordement comprend une rainure dans laquelle la nervure du crochet est destinée à être engagée, en position de verrouillage.

Avantageusement, le module de raccordement comporte dans sa face d'assemblage au boîtier un évidement qui, destinée au logement du crochet de verrouillage du boîtier, est délimité du côté de l'intérieur du module par une surface inclinée de la face supérieure du module vers sa face inférieure et de l'intérieur vers l'extérieur, la rainure de réception de la nervure du crochet étant située en dessous de cette surface inclinée, et en ce que le crochet comporte, au-dessus de sa nervure d'accrochage, une surface inclinée de la face supérieure du boîtier vers sa face inférieure, et de l'intérieur vers l'extérieur.

Cet agencement est avantageux dans la mesure où les deux surfaces inclinées, respectivement du module et du boîtier, délimitent, en position d'assemblage, un évidement en forme de V. Lorsque l'on introduit un outil, tel qu'un tournevis dans cet évidement en forme de V, la languette bascule, assurant la sortie de la nervure hors de la nervure dans laquelle elle est engagée, sous l'action d'un simple mouvement de translation du tournevis, sans nécessiter un mouvement de basculement de celui-ci. En outre, le dégagement du crochet est réalisé avant que le tournevis n'arrive au niveau de la nervure, évitant ainsi tout risque de détérioration de celle-ci.

Selon une seconde forme d'exécution de ce dispositif, le boîtier comprend un crochet déformable élastiquement destiné à venir, en position de verrouillage, s'engager derrière une butée solidaire du module de raccordement, ce dernier étant équipé d'une pièce de déverrouillage comportant une partie de commande qui, accessible depuis sa face supérieure, est déplaçable en translation perpendiculairement à celle-ci, une partie d'actionnement du crochet vers sa position de déverrouillage, lorsque la partie de commande a effectué une première course, une partie d'appui sur une butée fixe du boîtier lorsque la partie de commande a effectué une seconde course et une partie d'appui sur une butée fixe du module, en vue de faire coulisser le module par rapport au boîtier lorsque la partie de commande est actionnée au-delà de cette seconde course.

Avantageusement, la pièce de déverrouillage du module de raccordement comprend une partie de commande constituée par un plot sur lequel est articulée, autour d'un axe perpendiculaire à l'axe de translation du plot, une extrémité d'un bras rigide dont l'autre extrémité est engagée entre deux butées décalées verticalement, dont celle inférieure sert à l'accrochage du crochet du boîtier, la longueur du bras étant telle que lorsque le plot de commande est en regard des butées, l'extrémité libre du bras dégage le crochet vis-à-vis de la butée basse d'accrochage de celui-ci, une butée fixe étant prévue sur le boîtier, en dessous des butées du module et sensiblement à mi-longueur du bras, contre laquelle le bras vient prendre appui lorsque le plot est actionné en translation au-delà de la position de dégagement du crochet, l'extrémité libre du bras prenant alors appui contre la butée haute du module et assurant un déplacement en translation de celui-ci vis-à-vis du boîtier.

Ce dispositif est avantageux car non seulement le déverrouillage est obtenu par un simple mouvement de translation exercé sur la pièce de déverrouillage, mais encore la fin de ce mouvement de translation permet le dégagement du module relativement au boîtier.

Suivant une autre forme d'exécution de ce dispositif, le boîtier comprend, dans sa face d'assemblage, une languette déformable élastiquement, située sensiblement à mi-largeur de cette face et comportant deux crochets de verrouillage situés de part et d'autre d'une nervure centrale de déverrouillage, tandis que le module de raccordement comprend deux butées fixes destinées à coopérer avec les deux crochets du boîtier, et est équipé d'une pièce de déverrouillage montée coulissante perpendiculairement à la face supérieure du module et comportant une nervure destinée, lorsque la pièce est enfoncée dans le module, à prendre appui contre la nervure centrale de la languette du boîtier pour faire basculer celle-ci vers la position de déverrouillage des crochets.

Selon une caractéristique du dispositif, les crochets du boîtier et les butées d'accrochage du module présentent des surfaces d'accrochage perpendiculaires au plan d'assemblage du boîtier et du module et des surfaces d'engagement d'inclinaison inverse pour le boîtier et le module. L'appui des surfaces d'engagement des butées sur les surfaces d'accrochage des crochets permet lors de la mise en place du module sur le boîtier de faire basculer la languette dans un sens d'escamotage des crochets. Lorsque les surfaces d'engagement échappent l'une à l'autre, les surfaces d'accrochage perpendiculaires assurent la retenue du module sur le boîtier.

Avantageusement, la nervure centrale de déverrouillage dépasse par rapport aux crochets de verrouillage de la languette du boîtier.

Le fait que cette nervure centrale de déverrouillage soit plus épaisse que les crochets de verrouillage permet d'assurer un pivotement suffisant de la languette pour que les crochets de verrouillage échappent aux butées d'accrochage du module.

Suivant une autre caractéristique intéressante de ce dispositif, la pièce de déverrouillage du module de raccordement est prolongée par deux branches symétriques et articulées sur la pièce autour d'axes perpendiculaires au plan d'assemblage du boîtier et du module, les extrémités libres des branches étant engagées dans deux cavités horizontales ménagées dans le module, et les branches étant destinées chacune à prendre appui, lorsque la pièce de déverrouillage est actionnée au-delà de la position de libération des crochets, contre une butée fixe solidaire du boîtier, afin de provoquer un basculement vers le haut des extrémités des branches et un déplacement du module par rapport au boîtier. Dans ce cas encore, la simple translation de la pièce de déverrouillage permet non seulement de déverrouiller le module du boîtier mais encore de procurer un déplacement du module par rapport au boîtier.

De toute façon l'invention sera bien comprise à l'aide de la description qui suit, en référence au dessin schématique annexé représentant, à titres d'exemples non limitatifs, plusieurs formes d'exécution de ce dispositif.
Figure 1 est une vue en perspective éclatée d'un premier dispositif.
Figure 2 est une vue en coupe longitudinale et à échelle agrandie de l'assemblage entre un module et un boîtier.
Figure 3 est une vue en perspective éclatée d'un deuxième dispositif.
Figures 4 à 6 sont trois vues schématiques de principe correspondant à trois positions respectivement verrouillées en cours de déverrouillage et déverrouillées du module par rapport au boîtier.
Figure 7 est une vue en perspective éclatée d'une troisième forme d'exécution de ce dispositif.
Figure 8 est une vue en coupe passant par le plan d'assemblage du boîtier et du module du dispositif de verrouillage.
Figure 9 est une vue en coupe et à échelle agrandie du dispositif de verrouillage, selon la ligne IX-IX de la figure 8.
Figures 10 et 11 sont deux vues du dispositif de verrouillage, similaires à figures 10 et 11, respectivement au cours du déverrouillage et en fin de déverrouillage.

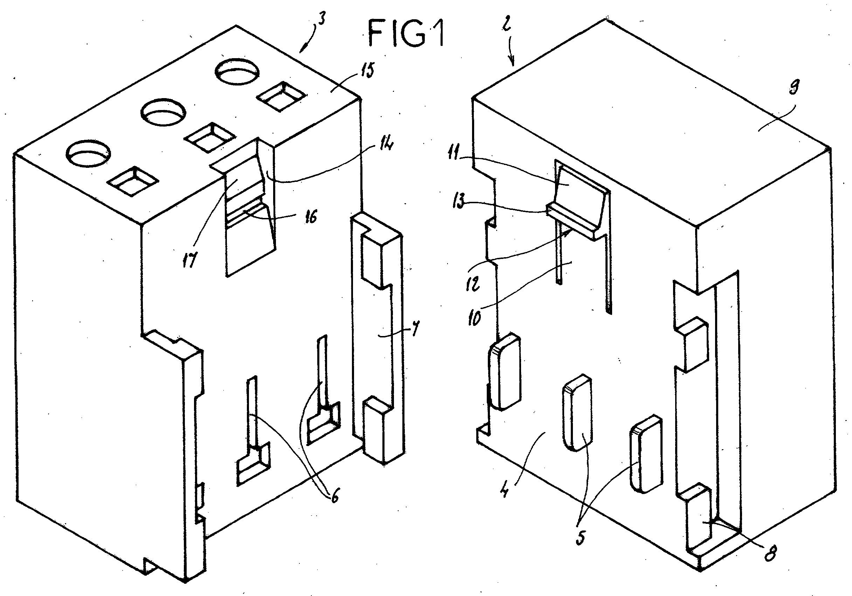

La figure 1 représente un boîtier électronique 2 et un module de raccordement 3 destinés à être accouplés avec la face longitudinale d'assemblage 4 du boîtier font saillie des broches 5 destinées à être engagées dans des fentes 6 que comporte le module de raccordement 3. Ce module de raccordement comporte des moyens de liaison avec des câbles électriques, ces moyens n'étant pas représentés.

L'assemblage entre le module 3 et le boîtier 2 est réalisé par l'intermédiaire d'un système de glissière 7, 8 discontinu. Ce système de glissière permet, après mise en appui du module contre le boîtier avec un certain décalage longitudinal, de réaliser l'assemblage par coulissement longitudinal.

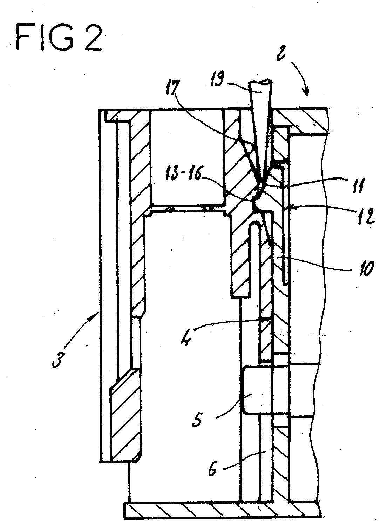

Dans la première forme d'exécution représentée aux figures 1 et 2, le boîtier comporte, dans sa face d'assemblage, et à proximité de sa face supérieure 9, une languette élastique 10 comportant un crochet 12 constitué par une nervure horizontale 13. Entre la face supérieure du boîtier et la nervure 13, le crochet 12 présente une surface inclinée 14 orientée de haut en bas et de l'intérieur vers l'extérieur.

Il doit être noté que les notions de face supérieure du boîtier et du module sont des positions relatives et utilisées de façon conventionnelle dans la présente description. Il va de soi que la face 9 du boîtier pourrait ne pas être la face supérieure si le boîtier occupait une autre position dans l'espace.

Le module de raccordement 3 présente, dans sa face d'assemblage, un évidement 14 débouchant dans sa face supérieure 15. Dans cet évidement est ménagée une rainure transversale 16 destinée à recevoir la nervure 13 du crochet 12. Au-dessus de la rainure 16 est ménagée une surface 17 inclinée de haut en bas et de l'intérieur vers l'extérieur.

La figure 2 représente une vue en coupe du boîtier et du module en position assemblée. Il ressort de cette figure qu'en position d'assemblage la nervure 13 est engagée dans la rainure 16. Il ressort également de cette figure que les surfaces inclinées 11 et 17, en sens inverse, permettent l'introduction d'un outil 19 tel qu'un tournevis, qui va provoquer par un seul mouvement axial, compte tenu de l'effet de coin qu'il exerce le basculement du crochet 12 vers sa position d'ouverture afin de permettre la libération du module 3.

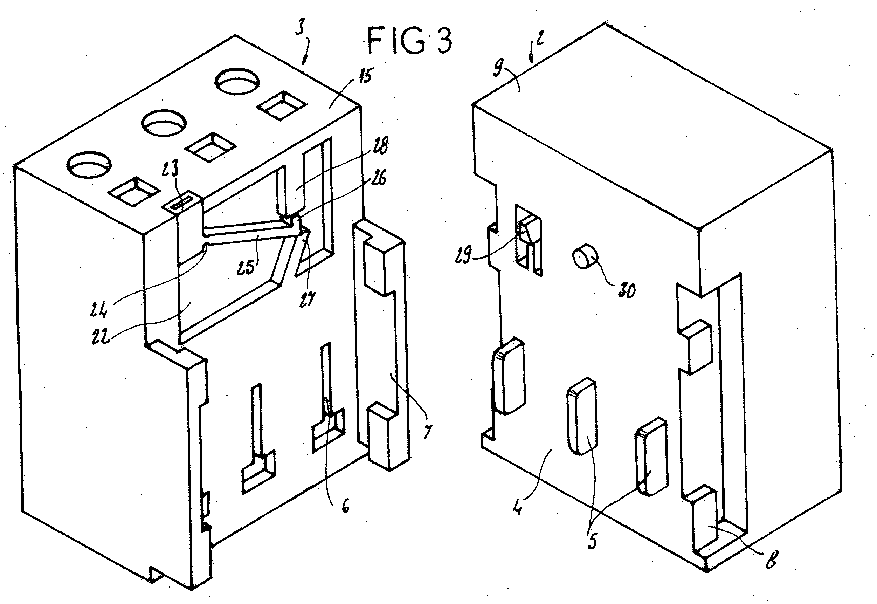

Les figures 3 à 6 représentent une seconde forme d'exécution de ce dispositif, dans laquelle les mêmes éléments sont désignés par les mêmes références que précédemment.

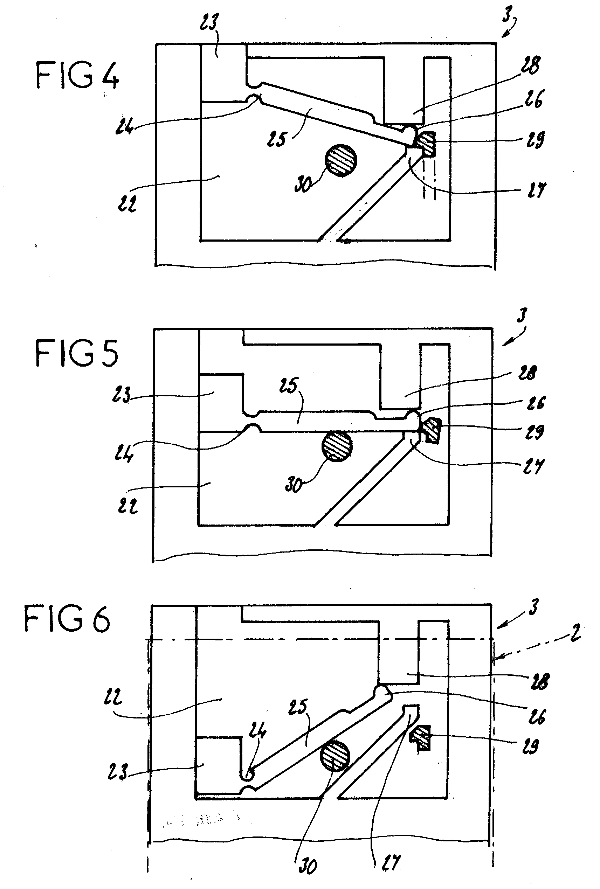

Dans ce dispositif, le module 3 comporte, dans sa face d'assemblage, un évidement 22 dans lequel est monté coulissant une pièce de déverrouillage comprenant un plot 23. Sur le plot 23, est articulé en 24 un bras rigide 25 dont l'extrémité libre 26 est engagée entre une butée basse 27 et une butée haute 28. La butée basse 27 sert, en position de verrouillage du module sur le boîtier à l'accrochage d'un crochet 29 monté sur le boîtier et élastiquement déformable. Lorsque le module est monté sur le boîtier, comme tel est le cas dans la forme d'exécution représentée à la figure 4, une butée 30 dépassant de la face d'assemblage du boîtier est située légèrement en dessous de la butée basse 27 du module. La figure 4 représente le module en position assemblée sur le boîtier. Dans cette position, le crochet 29 est engagé derrière la butée basse 27. Lorsque l'opérateur exerce une pression verticale sur le plot coulissant 23, celui-ci s'enfonce dans l'évidement 22, et le bras 25 pivote au niveau de l'articulation 24 par rapport aux plots. Compte tenu de la longueur du bras 25, celui-ci pousse le crochet vers l'extérieur, assurant la libération du module vis-à-vis du boîtier. Cette position est représentée à la figure 5. Lorsque l'opérateur continue à exercer une pression sur le plot 23, le bras 25 prend appui contre la butée haute 28, et assure le soulèvement du module en raison du pivotement du bras relativement à la butée fixe 30.Cette position est représentée à la figure 6.

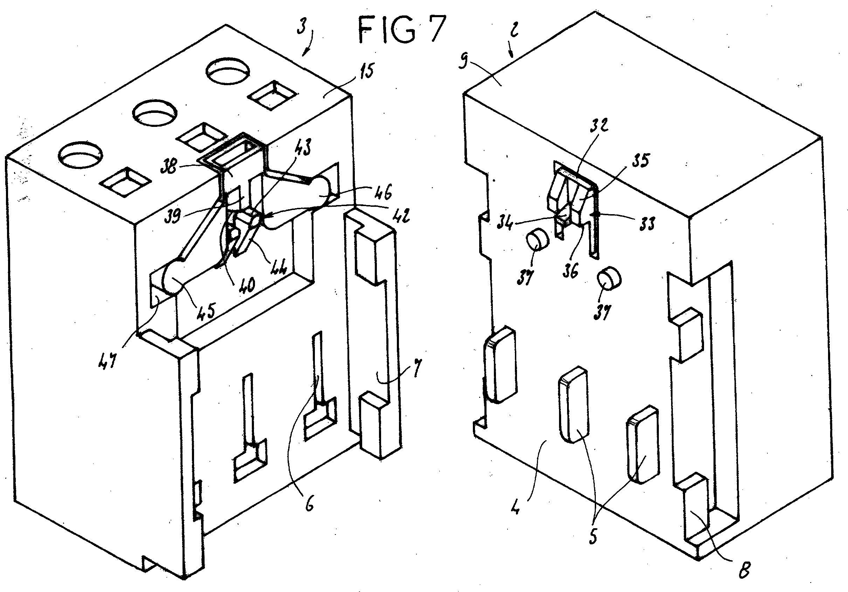

Les figures 7 à 11 représentent une troisième forme d'exécution de ce dispositif, dans laquelle les mêmes éléments sont désignés par les mêmes références que précédemment.

Dans ce cas, le boîtier 2 comprend dans sa face d'assemblage, une languette 32 déformable élastiquement, située sensiblement à mi largeur de cette face, et comprenant deux crochets de verrouillage 33 situés de part et d'autre d'une nervure centrale de déverrouillage 34. La nervure centrale de déverrouillage dépasse par rapport aux deux crochets 33. Chaque crochet 33 comporte de haut en bas une surface d'engagement 35 inclinée de haut en bas et de l'intérieur vers l'extérieur, et une surface 36 d'engagement en vue du verrouillage, perpendiculaire au plan d'assemblage du boîtier et du module. La face d'assemblage du boîtier 2 comporte, en dessous de la languette 32 deux butées fixes 37 symétriques.

Le module de raccordement 3 comprend, dans sa face d'assemblage, une pièce de déverrouillage 38 montée coulissante parallèlement au plan d'assemblage, et accessible à partir de la face supérieure du module. Cette pièce de déverrouillage comporte une nervure centrale de commande 39 présentant une surface inclinée 40 de haut en bas et de l'extérieur vers l'intérieur, destinée à venir prendre appui, lors du déverrouillage sur la nervure centrale 34 de la languette 32 du boîtier 2. De la face d'assemblage du module de raccordement 3 font saillie deux butées 42 de même écartement que les crochets 33 du boîtier 2, et présentant pour leur part une surface d'accrochage 43 perpendiculaire au plan d'assemblage et une surface 44 inclinée de haut en bas et de l'extérieur vers l'intérieur c'est-à-dire avec une inclinaison inverse de celle des surfaces 35 des crochets 33.

La pièce de déverrouillage 38 est prolongée par deux branches 45 symétriques par rapport à la pièce 38 et articulées chacune sur cette pièce autour d'un axe perpendiculaire au plan d'assemblage du boîtier et du module. Les extrémités libres 46 des bras 45 sont engagées chacune dans une cavité 47 ménagée dans le module, cette cavité étant horizontale.

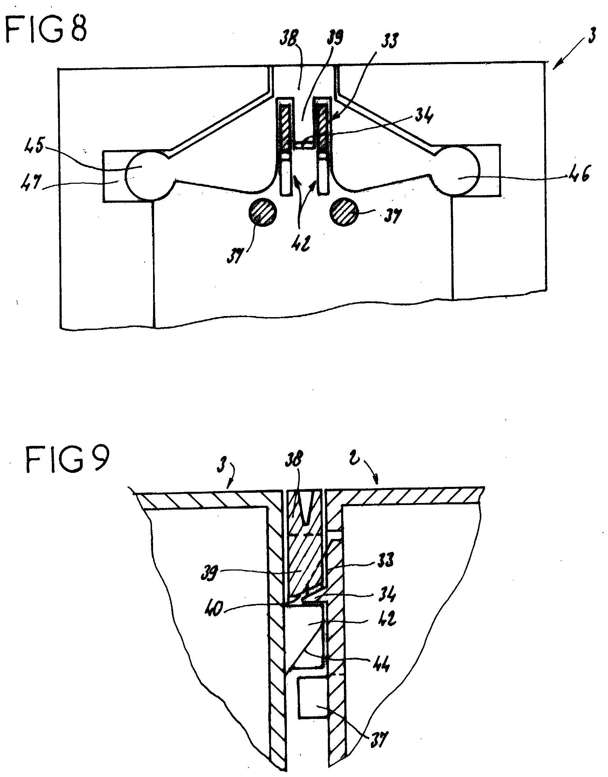

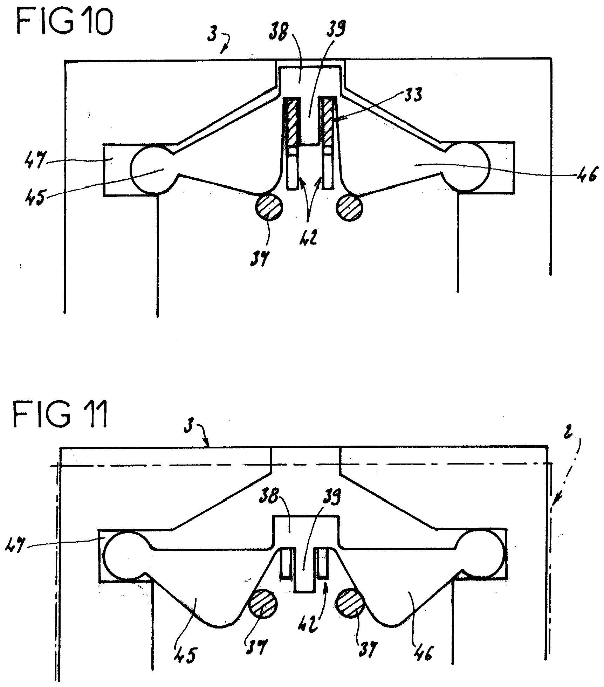

Lors de l'assemblage du module et du boîtier, les surfaces inclinées 44 des butées 42 prennent appui contre les surfaces inclinées 35 des crochets 33, provoquant l'escamotage de la languette 32. Lorsque les surfaces inclinées échappent l'une à l'autre, le surfaces d'accrochage respectivement 36 et 43 des crochets et des butées viennent en prise, assurant le verrouillage du module sur le boîtier. Le dispositif est dans la position représentée aux figures 8 et 9 au dessin. Pour réaliser le déverrouillage, l'opérateur appuie à l'aide d'un outil tel qu'un tournevis sur la pièce 38. Au cours de ce mouvement, la nervure centrale de commande 39 du module vient en appui contre la nervure centrale de déverrouillage 34 du boîtier, provoquant le basculement de la languette et l'effacement des crochets 33 qui échappent aux butées 42. Lorsque le mouvement de déplacement de la pièce 38 se poursuit, et comme montré à la figure 10, les bras 45 viennent en appui contre les butées 37 du boîtier. Lorsque le mouvement se poursuit encore, les butées 37 provoquent le basculement des bras vers le haut, assurant un mouvement de coulissement du module relativement au boîtier, dans un sens de désolidarisation de ces deux éléments.

Comme il ressort de ce qui précède, l'invention apporte une grande amélioration à la technique existante, en fournissant un dispositif de structure simple, permettant un désaccouplement sûr et rapide d'un module de raccordement vis-à-vis d'un boîtier électronique de connexion.

Comme il va de soi, l'invention ne se limite pas aux seules formes d'exécution de ce dispositif décrites ci-dessus à titre d'exemples. Elle en embrasse au contraire toutes les variantes. C'est ainsi notamment que les différentes caractéristiques présentées précédemment pourraient être associées de façon différente sans que l'on sorte pour autant du cadre de l'invention.

## Revendications

1. Dispositif de connexion d'un boîtier électronique, comprenant un module (3) de raccordement destiné à être accouplé avec la face longitudinale d'assemblage d'un boîtier (2), le module (3) et le boîtier (2) étant assemblés par un système de glissières (7, 8) permettant une fixation par coulissement longitudinal, avec verrouillage par une languette élastique (10, 29, 32), **caractérisé en ce que** le dispositif réalise une liaison électrique d'une part avec des broches dépassant de cette face longitudinale d'assemblage et d'autre part avec des câbles conducteurs et la languette élastique (10, 29, 32) est associée au boîtier (2) et est destinée à coopérer avec un organe de verrouillage (16, 27, 42) associé au module de raccordement (3).

2. Dispositif selon la revendication 1, **caractérisé en ce que** la languette élastique de verrouillage (10) est en forme de crochet (12) déformable élastiquement muni d'une nervure d'accrochage (13), tandis que l'organe de verrouillage associé au module de raccordement comprend une rainure (16) dans laquelle la nervure (13) du crochet est destinée à être engagée, en position de verrouillage.

3. Dispositif selon la revendication 2, **caractérisé en ce que** le module de raccordement (3) comporte dans sa face d'assemblage au boîtier un évidement (14) qui, destinée au logement du crochet de verrouillage (12) du boîtier (2), est délimité du côté de l'intérieur du module par une surface (17) inclinée de la face supérieure du module vers sa face inférieure et de l'intérieur vers l'extérieur, la rainure (16) de réception de la nervure du crochet étant située en dessous de cette surface inclinée (17), et **en ce que** le crochet (12) comporte, au-dessus de sa nervure d'accrochage (13), une surface (11) inclinée de la face supérieure du boîtier (2) vers sa face inférieure, et de l'intérieur vers l'extérieur.

4. Dispositif selon la revendication 1, **caractérisé en ce que** le boîtier (2) comprend un crochet (29) déformable élastiquement destiné à venir, en position de verrouillage, s'engager derrière une butée (27) solidaire du module de raccordement (3), ce dernier étant équipé d'une pièce de déverrouillage comportant une partie de commande (23) qui, accessible depuis sa face supérieure, est déplaçable en translation perpendiculairement à celle-ci, une partie (26) d'actionnement du crochet (29) vers sa position de déverrouillage, lorsque la partie de commande (23) a effectué une première course, une partie d'appui (25) sur une butée fixe (30) du boîtier lorsque la partie de commande (23) a effectué une seconde course et une partie d'appui (26) sur une butée fixe (28) du module, en vue de faire coulisser le module (3) par rapport au boîtier (2) lorsque la partie de commande est actionnée au-delà de cette seconde course.

5. Dispositif selon la revendication 4, **caractérisé en ce que** la pièce de déverrouillage du module de raccordement comprend une partie de commande constituée par un plot (23) sur lequel est articulée, autour d'un axe (24) perpendiculaire à l'axe de translation du plot, une extrémité d'un bras rigide (25) dont l'autre extrémité (26) est engagée entre deux butées (27, 28) décalées verticalement, dont celle inférieure (27) sert à l'accrochage du crochet (29) du boîtier, la longueur du bras (25) étant telle que lorsque le plot de commande (23) est en regard des butées (27, 28), l'extrémité libre (26) du bras (25) dégage le crochet (29) vis-à-vis de la butée basse d'accrochage (27) de celui-ci, une butée fixe (30) étant prévue sur le boîtier, en dessous des butées (27, 28) du module et sensiblement à mi-longueur du bras, contre laquelle le bras (25) vient prendre appui lorsque le plot (23) est actionné en translation au-delà de la position de dégagement du crochet, l'extrémité libre (26) du bras prenant alors appui contre la butée haute (28) du module et assurant un déplacement en translation de celui-ci vis-à-vis du boîtier (2).

6. Dispositif selon la revendication 1, **caractérisé en ce que** le boîtier (2) comprend, dans sa face d'assemblage, une languette (32) déformable élastiquement, située sensiblement à mi-largeur de cette face et comportant deux crochets de verrouillage (33) situés de part et d'autre d'une nervure centrale (34) de déverrouillage, tandis que le module de raccordement (3) comprend deux butées fixes (42) destinées à coopérer avec les deux crochets (33) du boîtier, et est équipé d'une pièce de déverrouillage (38) montée coulissante perpendiculairement à la face supérieure du module et comportant une nervure (39) destinée, lorsque la pièce (38) est enfoncée dans le module (3), à prendre appui contre la nervure centrale (34) de la languette (32) du boîtier pour faire basculer celle-ci vers la position de déverrouillage des crochets.

7. Dispositif selon la revendication 6, **caractérisé en ce que** les crochets (33) du boîtier (2) et les butées d'accrochage (42) du module (3) présentent des surfaces d'accrochage (36, 43) perpendiculaires au plan d'assemblage du boîtier (2) et du module (3) et des surfaces d'engagement (35, 44) d'inclinaison inverse pour le boîtier (2) et le module (3).

8. Dispositif selon l'une des revendications 6 et 7, **caractérisé en ce que** la nervure centrale de déverrouillage (34) dépasse par rapport aux crochets de verrouillage (33) de la languette (32) du boîtier (2).

9. Dispositif selon l'une des revendications 6 à 8, **caractérisé en ce que** la pièce de déverrouillage (38) du module de raccordement (3) est prolongée par deux branches (45) symétriques et articulées sur la pièce autour d'axes perpendiculaires au plan d'assemblage du boîtier et du module, les extrémités libres (46) des branches étant engagées dans deux cavités (47) horizontales ménagées dans le module (3), et les branches (45) étant destinées chacune à prendre appui, lorsque la pièce de déverrouillage (38) est actionnée au-delà de la position de libération des crochets, contre une butée fixe (37) solidaire du boîtier (2), afin de provoquer un basculement vers le haut des extrémités des branches (45) et un déplacement du module (3) par rapport au boîtier (2).

## Patentansprüche

1. Verbindungsvorrichtung für ein elektronisches Gehäuse, umfassend ein Anschlussmodul (3), das dazu bestimmt ist, mit der Längsverbindungsfläche eines Gehäuses (2) gekoppelt zu werden, wobei das Modul (3) und das Gehäuse (2) durch ein Gleitschienensystem (7, 8) verbunden sind, das eine Befestigung durch Längsverschiebung ermöglicht, mit Verriegelung durch eine elastische Zunge (10, 29, 32), **dadurch gekennzeichnet** die Verbindungsvorrichtung eine elektrische Verbindung einerseits mit Klemmen, die über diese Längsverbindungsfläche überstehen, und andererseits mit Leiterkabeln realisiert, und dass die elastische Zunge (10, 29, 32) dem Gehäuse (2) zugeordnet ist und für das Zusammenwirken mit einem Verriegelungsorgan (16, 27, 42) bestimmt ist, das dem Anschlussmodul (3) zugeordnet ist.

2. Vorrichtung nach Anspruch 1, **dadurch gekennzeichnet, dass** die elastische Verriegelungszunge (10) die Form eines elastisch verformbaren Hakens (12) hat, der mit einer Einhängerippe (13) versehen ist, während das dem Anschlussmodul zugeordnete Verriegelungsorgan eine Nut (16) umfasst, in der die Rippe (13) des Hakens in Verriegelungsposition zum Eingriff bestimmt ist.

3. Vorrichtung nach Anspruch 2, **dadurch gekennzeichnet, dass** das Anschlussmodul (3) auf seiner Fläche für die Verbindung mit dem Gehäuse eine Ausnehmung (14) aufweist, die für die Aufnahme des Verriegelungshakens (12) des Gehäuses (2) bestimmt ist und auf der Seite des Inneren des Moduls durch eine Oberfläche (17) begrenzt ist, die von der oberen Fläche des Moduls zu seiner unteren Fläche und von innen nach außen geneigt ist, wobei sich die Nut (16) für die Aufnahme der Rippe des Hakens unterhalb dieser geneigten Oberfläche (17) befindet, und dass der Haken (12), oberhalb seiner Einhängerippe (13), eine Oberfläche (11) aufweist, die von der oberen Fläche des Gehäuses (2) zu seiner unteren Fläche und von innen nach außen geneigt ist.

4. Vorrichtung nach Anspruch 1, **dadurch gekennzeichnet, dass** das Gehäuse (2) einen elastisch verformbaren Haken (29) umfasst, der in Verriegelungsstellung dazu bestimmt ist, einen Anschlag (27) zu hintergreifen, der mit dem Anschlussmodul (3) fest verbunden ist, wobei dieser letzte mit einem Entriegelungselement versehen ist mit einem Steuerteil (23), der von seiner Oberfläche her zugänglich ist und senkrecht zu diesem in Translation beweglich ist, einem Teil (26) zum Betätigen des Hakens (29) in seine Entriegelungsstellung, wenn das Steuerteil (23) einen ersten Weg zurück gelegt hat, einem Teil (25) zum Abstützen an einem festen Anschlag (30) des Gehäuses, wenn das Steuerteil (23) einen zweiten Weg zurückgelegt hat, und einem Teil (26) zum Abstützen an einem festen Anschlag (28) des Moduls, um das Modul (3) relativ zu dem Gehäuse (2) gleiten zu lassen, wenn das Steuerteil über diesen ersten Weg hinaus betätigt wird.

5. Vorrichtung nach Anspruch 4, **dadurch gekennzeichnet, dass** das Entriegelungselement des Anschlussmoduls ein Steuerteil umfasst, das durch einen Stift (23) gebildet ist, an dem, um eine Achse (24) senkrecht zu der Translationsachse des Stifts, ein Ende eines starren Arms (25) angelenkt ist, dessen anderes Ende (26) zwischen zwei vertikal versetzten Anschlägen (27, 28) im Eingriff ist, von denen der untere Anschlag (27) dem Einhängen des Hakens (29) des Gehäuses dient, wobei die Länge des Arms (25) dergestalt ist, dass, wenn der Steuerstift (23) den Anschlägen (27, 28) gegenüberliegt, das freie Ende (26) des Arms (25) den Haken (29) gegenüber dem unteren Einhänganschlag (27) von diesem freigibt, wobei ein fester Anschlag (30) an dem Gehäuse, unterhalb der Anschläge (27, 28) des Moduls und im Wesentlichen auf halber Länge des Arms, vorgesehen ist, gegen den der Arm (25) zur Abstützung kommt, wenn der Stift (23) in Translation über die Freigabeposition des Hakens hinaus bewegt wird, wobei das freie Ende (26) des Arms dann gegen den oberen Anschlag (28) des Moduls zur Abstützung kommt und eine Bewegung in Translation dieses letzten gegenüber dem Gehäuse (2) bewirkt.

6. Vorrichtung nach Anspruch 1, **dadurch gekennzeichnet, dass** das Gehäuse (2), in seiner Verbindungsfläche, eine elastisch verformbare Zunge (32) umfasst, die sich im Wesentlichen auf halber Länge dieser Fläche befindet und zwei Verriegelungshaken (33) aufweist, die sich zu beiden Seiten einer mittleren Entriegelungsrippe (34) befinden, während das Anschlussmodul (3) zwei feste Anschläge (42) umfasst, die für das Zusammenwirken mit den zwei Haken (33) des Gehäuses bestimmt sind, und mit einem Entriegelungselement (38) versehen ist, das senkrecht zu der oberen Fläche des Moduls gleitend gelagert ist und eine Rippe (39) aufweist, die dazu bestimmt ist, wenn das Element (38) in das Modul (3) hineingedrückt ist, gegen die mittlere Rippe (34) der Zunge (32) des Gehäuses zur Abstützung zu kommen, um diese in die Position zum Entriegeln der Haken schwenken zu lassen.

7. Vorrichtung nach Anspruch 6, **dadurch gekennzeichnet, dass** die Haken (33) des Gehäuses (2) und die Einhänganschläge (42) des Moduls (3) Einhängoberflächen (36, 43) senkrecht zu der Verbindungsebene des Gehäuses (2) und des Moduls (3) und Eingriffsoberflächen (35, 44) mit umgekehrter Neigung für das Gehäuse (2) und das Modul (3) aufweisen.

8. Vorrichtung nach einem der Ansprüche 6 und 7, **dadurch gekennzeichnet, dass** die mittlere Entriegelungsrippe (34) relativ zu den Verriegelungshaken (33) der Zunge (32) des Gehäuses (2) übersteht.

9. Vorrichtung nach einem der Ansprüche 6 bis 8, **dadurch gekennzeichnet, dass** das Entriegelungselement (38) des Anschlussmoduls (3) sich über zwei Schenkel (45) fortsetzt, die symmetrisch sind und an dem Element um Achsen senkrecht zu der Verbindungsebene des Gehäuses und des Moduls angelenkt sind, wobei die freien Ende, (46) der Schenkel in zwei horizontalen Vertiefungen (47) im Eingriff sind, die in dem Modul (3) vorgesehen sind, und wobei die Schenkel (45) dazu bestimmt sind, jeder, wenn das Entriegelungselement (38) über die Freigabeposition der Haken hinaus betätigt wird, gegen einen festen Anschlag (37) zur Abstützung zu kommen, der mit dem Gehäuse (2) fest verbunden ist, um ein Schwenken der Enden der Schenkel (45) nach oben und eine Bewegung des Moduls (3) relativ zu dem Gehäuse (2) zu bewirken.

## Claims

1. Connection device for an electronic box, comprising a connection module (3) intended to be coupled with the longitudinal mating face of a box (2), the module (3) and the box (2) being mated by a system of slides (7, 8) allowing them to be fastened by longitudinal sliding, with locking by a resilient tab (10, 29, 32), **characterized in that** the device makes an electrical connection with, on the one hand, pins projecting from this longitudinal mating face and, on the other hand, with conducting cables, and the resilient tab (10, 29, 32) is associated with the box (2) and is intended to cooperate with a locking member (16, 27, 42) associated with the connection module (3).

2. Device according to Claim 1, **characterized in that** the resilient locking tab (10) is in the form of an elastically deformable hook (12) provided with a catching rib (13), while the locking member associated with the connection module has a groove (16) with which the rib (13) of the hook is intended to be engaged, in the locking position.

3. Device according to Claim 2, **characterized in that** the connection module (3) includes, in its mating face for mating with the box, a recess (14) which, intended for housing the locking hook (12) on the box (2), is bounded on the inside of the module by a surface (17) which is inclined from the upper face of the module toward its lower face, and from the inside outward, the groove (16) for accommodating the rib of the hook being situated below this inclined surface (17) and **in that** the hook (12) has, above its catching rib (13), a surface (11) that is inclined from the upper face of the box (2) toward its lower face, and from the inside outward.

4. Device according to Claim 1, **characterized in that** the box (2) includes an elastically deformable hook (29) intended, in the locking position, to engage behind a stop (27) integral with the connection module (3), the latter being equipped with an unlocking piece having a drive part (23) which, accessible from its upper face, is able to be moved in translation, perpendicular to the latter, a part (26) for actuating the hook (29) toward its unlocking position, when the drive part (23) has undergone a first travel, a part (25) for bearing on a fixed stop (30) on the box when the drive part (23) has undergone a second travel and a part (26) for bearing on a fixed stop (28) of the module (3), for the purpose of making the module (3) slide relative to the box (2), when the drive part is actuated beyond this second travel.

5. Device according to Claim 4, **characterized in that** the piece for unlocking the connection module comprises a drive part formed by a stud (23) to which one end of a rigid arm (25) is articulated, about an axis (24) perpendicular to the axis of translation of the stud, the other end (26) of which rigid arm is engaged between two vertically offset stops (27, 28), the lower (27) one of which serves for catching the hook (29) on the box, the length of the arm (25) being such that, when the drive stud (23) is opposite the stops (27, 28), the free end (26) of the arm (25) disengages the hook (29) with respect to the bottom stop (27) for catching the latter, a fixed stop (30) being provided on the box, beneath the stops (27, 28) on the module and approximately halfway along the arm, against which stop the arm (25) bears when the stud (23) is actuated in translation beyond the position of disengagement of the hook, the free end (26) of the arm then bearing against the high stop (28) on the module and ensuring that the latter moves in translation with respect to the box (2) .

6. Device according to Claim 1, **characterized in that** the box (2) includes, in its mating face, an elastically deformable tab (32) located approximately at mid-width of this face and having two locking hooks (33) located on either side of a central unlocking rib (34), while the connection module (3) includes two fixed stops (42) intended to cooperate with the two hooks (33) on the box and is equipped with an unlocking piece (38) mounted so as to slide perpendicular to the upper face of the module and having a rib (39) intended, when the piece (38) is pushed into the module (3), to bear against the central rib (34) of the tab (32) on the box in order to make said tab tilt toward the position for unlocking the hooks.

7. Device according to Claim 6, **characterized in that** the hooks (33) on the box (2) and the catching stops (42) on the module (3) have catching surfaces (36, 43) perpendicular to the mating plane of the box (2) and of the module (3) and engagement surfaces (35, 44) of reverse inclination in the case of the box (2) and the module (3).

8. Device according to either of Claims 6 and 7, **characterized in that** the central unlocking rib (34) goes beyond the tab (32) locking hooks (33) on the box (2).

9. Device according to one of Claims 6 to 8, **characterized in that** the piece (38) for unlocking the connection module (3) is extended by two symmetrical branches (45) that are articulated to the piece about axes perpendicular to the mating plane of the box and of the module, the free ends (46) of the branches being engaged in two horizontal cavities (47) provided in the module (3), and the branches (45) being each intended to bear, when the unlocking piece (38) is actuated beyond the position for releasing the hooks, against a fixed stop (37) integral with the box (2), so as to cause the ends of the branches (45) to tilt upward and the module (3) to move relative to the box (2).
